# EUROPÄISCHE PATENTSCHRIFT

(11) **EP 1 542 305 B1**
(45) Veröffentlichungstag und Bekanntmachung des Hinweises auf die Patenterteilung: **13.10.2010**
(21) Anmeldenummer: 04029073.6
(22) Anmeldetag: 08.12.2004
(51) Int. Cl.: H01M 8/06, H01M 8/04

(54) **System und Verfahren zur Entfernung von Wasserstoff aus Brennstoffzellen-Abgasen**
System and method for the removal of hydrogen from fuel cell waste gas
Système et méthode pour l'enlèvement de l'hydrogène du gaz d'échapement de pile à combustible

(30) Priorität: 08.12.2003 DE 10357198
(43) Veröffentlichungstag der Anmeldung: 15.06.2005
(73) Patentinhaber: Proton Motor Fuel Cell GmbH, 82319 Starnberg (DE)
(72) Erfinder: Götz, Michael, Dr., 97816 Lohr (DE); Wallner, Stefan, 82008 Unterhaching (DE); Stohldreier, Eilhart, 82377 Penzberg (DE)
(74) Vertreter: Klunker . Schmitt-Nilson . Hirsch

(56) Entgegenhaltungen:
- EP-A- 1 104 039
- EP-A- 1 156 545
- EP-A- 1 205 991
- DE-A- 10 007 764
- DE-A- 10 114 166
- DE-A- 19 743 075

## Beschreibung

Die Erfindung betrifft eine Brennstoffzellen-Anlage mit katalytischem Brenner zur Behandlung von brenngashaltigen Abgasen und ein Verfahren zum Betreiben der Anlage.

Brennstoffzellen liefern elektrischen Strom durch elektrochemische Oxidation. Als Oxidationsmittel dient gewöhnlich Sauerstoff, der in Form von Luft zugeführt wird, und als eigentlicher Brennstoff dient Wasserstoff, der entweder unmittelbar zugeführt wird oder im System z.B. durch Spaltung von Erdgas gewonnen wird. Aufgrund der Brennbarkeit und der Explosionsneigung der Brennstoffe, insbesondere Wasserstoff, ist es wünschenswert, deren Freisetzung in die Umwelt zu vermeiden. Bei stationär in geschlossenen Räumen installierten Anlagen und bei mobilen Systemen, beispielsweise brennstoffzellengetriebenen Fahrzeugen, die kurzfristig oder dauerhaft in geschlossenen Räumen oder unter Dächern betrieben werden sollen, ist es zwingend erforderlich, die Freisetzung von gefährlichen Gasen zu verhindern. In geschlossenen Räumen sollte keine Abluft mit einer Wasserstoff-Konzentration von mehr als 40% der unteren Explosionsgrenze (entsprechend 1,6 Vol.-% Wasserstoff) an die Umgebung abgegeben werden. Auch bei im Freien betriebenen Anlagen ist es sicherer, wenn keine Wasserstoff-Emissionen auftreten.

Da ein Brennstoffzellen-System immer eine gewisse Menge an wasserstoffhaltigem Anodenabgas produziert, muss der darin enthaltene Wasserstoff entweder in den Wasserstoffkreislauf zurückgeführt oder zu einer inerten Substanz umgesetzt werden. Die Rückführung vergrößert den Umfang der Anlage und ist selten lohnend. Eine Umsetzung in eine inerte Substanz ist daher wünschenswert. Dies ist mittels eines katalytischen Brenners möglich.

Katalytische Brenner sind in der Technik bekannt. Sie sind in der Lage, Wasserstoff und andere Brenngase wie z.B. Methan, Ethan, Propan, Butan, Methanol zu inerten Materialien umzusetzen. Wasserstoff kann mit Hilfe von Luftsauerstoff zu Wasser oxidiert werden. Wird einem katalytischen Brenner Abgas aus einem Brennstoffzellen-System und Sauerstoff oder ein Sauerstoff enthaltendes Gas wie Luft zugeführt, sollte der im Abgas enthaltene Wasserstoff zu Wasser oxidiert werden und keine Gefahr mehr darstellen.

EP 1 156 545 A2 offenbart ein Brennstoffzellensystem sowie ein Verfahren zum Betreiben des Systems, das eine günstige Ausnutzung von Kathodenabgas zur Erhöhung der Nutzleistung des Systems erlaubt. Das Brennstoffzellensystem umfasst mindestens eine Brennstoffzelle, einen katalytischen Brenner, eine Zuführung für ein erstes Brennerspeisegas in Form von Brennstoffzellen-Abgas zu dem katalytischen Brenner, und eine Zuführung für ein Sauerstoff enthaltendes zweites Brennerspeisegas zu dem katalytischen Brenner. Ein Sensor zum Überwachen der Temperatur des katalytischen Brenners und ein Sensor zum Überwachen der Temperatur des Brennerabgases sind, wenn auch nicht ausdrücklich genannt, vermutlich ebenfalls vorgesehen. Das System weist auch eine Zudosiereinrichtung zur Zugabe von Brennstoff in den katalytischen Brenner und eine Steuereinrichtung zum Einleiten einer Änderung der Temperatur des Brennerabgases auf. Durch den katalytischen Brenner wird die emittierte Wasserstoffmenge erheblich verringert, aber es gibt keinerlei Hinweis darauf, dass die Wasserstoffemissionen in irgendeiner Weise überwacht werden.

EP 1 104 039 A2 offenbart ein ähnliches System mit ähnlicher Zweckbestimmung wie EP 1 156 545 A2. Das System umfasst mindestens eine Brennstoffzelle, einen katalytischen Brenner und eine Zuführung für Brennerspeisegas in Form von Anodenabgas und Kathodenabgas zu dem katalytischen Brenner. Ein Sensor zum Überwachen der Temperatur des katalytischen Brenners sowie zum Überwachen der Temperatur des Brennerabgases ist offensichtlich ebenfalls vorgesehen, denn es ist offenbart, dass die Abgastemperatur an einem Heizraum, der Abgas von dem katalytischen Brenner erhält, durch die Zudosierung von Brennmittel in den katalytischen Brenner gesteuert oder geregelt werden kann. Die Frage des Wasserstoffgehalts des Brennerabgases wird nicht angesprochen.

DE 197 43 075 A1 offenbart eine Brennstoffzellenanordnung, bei der verbrauchtes Kathodengas mit Frischluft und mit dem Anodenabgas vermischt und einem integrierten katalytischen Brenner zugeführt wird, um dort Wärme zu erzeugen. Die Anordnung enthält mindestens eine Brennstoffzelle, einen katalytischen Brenner und Zuführungen für Brennerspeisegas in Form von Brennstoffzellen-Abgas und in Form von sauerstoffhaltigem Gas. Einrichtungen zum Überwachen der Temperatur des katalytischen Brenners, zur Regelung der Gasströme in Reaktion auf die im Brenner erzeugte Wärmemenge oder zur Überwachung des Wasserstoffgehalts des Brennerabgases sind nicht offenbart.

Allerdings ist die Geschwindigkeit der Oxidationsreation im katalytische Benner stark temperaturabhängig. Bei tiefer Temperatur findet kaum Umsetzung statt, ab einer bestimmten Temperatur steigt die Reaktionsgeschwindigkeit rasch an, und es gilt näherungsweise die Arrhenius-Gleichung k = A · e^{-Ea/RT} (k = Reaktionsgeschwindigkeit, Eₐ = Aktivierungsenergie der Reaktion, A = Häufigkeitsfaktor, R = allgemeine Gaskonstante, T = Temperatur), bis schließlich eine Temperatur erreicht ist, bei der die Möglichkeit, aktive Katalysatorstellen zu erreichen, zum limitierenden Faktor wird.

Wird ein katalytischer Brenner mit einer gleich bleibenden Menge Wasserstoff beaufschlagt, kann das System so ausgelegt werden, dass sich die für eine vollständige Umsetzung optimale Temperatur einstellt.

Beim Betrieb eines Brennstoffzellen-Systems ist die in den katalytischen Brenner eingespeiste Wasserstoffmenge jedoch starken zeitlichen Schwankungen unterworfen, z.B. bedingt durch das intervallweise Spülen der Anodenräume bei Dead-End-Betrieb, oder auch durch Variieren der Brennstoffzellen-Leistung.

In Betriebsphasen, in denen das Brennstoffzellen-Abgas nur wenig Wasserstoff enthält, wird im Brenner kaum Wärme erzeugt, und dadurch sowie bedingt durch den Oxidationsluftstrom kühlt der Brenner rasch aus. Bei tiefer Temperatur ist der katalytische Brenner aber nicht von großem Nutzen. Die Umsetzungsgeschwindigkeit des Wasserstoffs ist zu langsam, um eine ausreichende Beseitigung von Wasserstoff aus dem Brennstoffzellenabgas zu gewährleisten.

Ein besonderes Problem stellt die Startphase der Anlage dar. Beim Anlaufen der Anlage ist der katalytische Brenner noch kalt, und es findet wenig Umsetzung von Wasserstoff statt, d.h. es wird eine zu hohe Menge von Wasserstoff in die Umgebung freigesetzt.

Andererseits darf die Temperatur im katalytischen Brenner auch nicht zu hoch werden. Eine zu hohe Temperatur kann im ungünstigsten Fall zur Zündung und explosionsartigen Reaktion des Wasserstoff/Luft-Gemisches im Brenner führen. Außerdem werden sehr heiße Brennerabgase erzeugt, die eine potenzielle Gefährdung für Bedienungspersonal darstellen.

Aufgabe der vorliegenden Erfindung ist es daher, eine Brennstoffzellen-Anlage mit einem katalytischen Brenner bereitzustellen, die bei Betrieb Abgas mit reduziertem Wasserstoffgehalt erzeugt.

Aufgabe der vorliegenden Erfindung ist es insbesondere, eine Brennstoffzellen-Anlage mit katalytischem Brenner bereitzustellen, die für einen Betrieb in geschlossenen Räumen geeignet ist.

Aufgabe der vorliegenden Erfindung ist es auch, eine Brennstoffzellen-Anlage mit katalytischem Brenner bereitzustellen, die bereits in der Startphase Abgas mit reduziertem Wasserstoffgehalt erzeugt.

Aufgabe der vorliegenden Erfindung ist es ferner, eine Brennstoffzellen-Anlage mit katalytischem Brenner bereitzustellen, bei der die Bildung von Temperaturspitzen im katalytischen Brenner vermieden wird.

Aufgabe der vorliegenden Erfindung ist es weiterhin, eine Brennstoffzellen-Anlage mit katalytischem Brenner bereitzustellen, die temperaturreduziertes Abgas erzeugt.

Aufgabe der vorliegenden Erfindung ist es darüber hinaus, ein Verfahren zum Betreiben einer derartigen Anlage bereitzustellen.

Die Aufgaben werden gelöst durch das Verfahren mit den Merkmalen gemäß Anspruch 1 und die Brennstoffzellen-Anlage mit den Merkmalen gemäß Anspruch 20.

Vorteilhafte Weiterbildungen der vorliegenden Erfindung sind in den jeweiligen abhängigen Ansprüchen angegeben.

Die erfindungsgemäße Brennstoffzellen-Anlage ist effizient und kompakt und sehr gut geeignet für Anwendungen, bei denen Gewicht und Platzbedarf eine Rolle spielen, insbesondere für die Anwendung in Kraftfahrzeugen. Die Anlage weist ein Brennstoffzellen-System mit mindestens einer Brennstoffzelle auf, wobei typischerweise Polymerelektrolytmembran-Brennstoffzellen verwendet werden. Die Erfindung ist jedoch auch für jeden anderen Brennstoffzellen-Typ, der mit Wasserstoff bzw. mit durch Reformierung erzeugtem Wasserstoff betrieben wird, geeignet. Typischerweise besteht das Brennstoffzellen-System aus einem Stapel mit einer Mehrzahl von Brennstoffzellen oder aus mehreren Stapeln mit jeweils einer Mehrzahl von Brennstoffzellen, bevorzugt Polymerelektrolytmembran-Brennstoffzellen.

Den Brennstoffzellen wird Wasserstoff und Sauerstoff zugeführt, beispielsweise in Form von Gasströmen, die den Anodenbereichen und den Kathodenbereichen Wasserstoff bzw. Sauerstoff zuführen und unverbrauchten Wasserstoff bzw. Sauerstoff wieder abführen. Dieses "offene" System wird in der Regel beim Kathodenbrenngas, für das typischerweise Luft verwendet wird, eingesetzt. Auch das Anodenbrenngas kann auf diese Weise zugeführt werden, bevorzugt wird hier jedoch der sog. "Dead-End"-Betrieb gewählt, d.h. Wasserstoff wird den Anoden der Brennstoffzellen zugeführt und verbraucht. Dabei sammeln sich im Anodenbereich unerwünschte Produkte wie Wasser und im Brenngas enthaltene Fremdgase oder durch die Membran hindurch in den Ariodenbereich diffundierende Gase. Diese müssen regelmäßig entfernt werden, was durch Spülen geschieht. Zum Spülen wird das "tote Ende" geöffnet und kurzzeitig ein Spülgas durch die Anodenräume geströmt. Das Spülgas kann ein separates inertes Gas sein, wie Stickstoff, meist aber verwendet man direkt das Anodenbrenngas, also Wasserstoff, zum Spülen. Typische Intervalle sind eine Spülung von etwa 0,5 s Dauer nach jeweils 20 bis 30 s Dead-End-Betrieb. Bei den Spülstößen verlässt unverbrauchter Wasserstoff die Brennstoffzellen. Mit Reformergas betriebene Brennstoffzellen werden nicht im Dead-End-Betrieb betrieben, da der im Reformer erzeugte Wasserstoff zu viele andere Gase wie Stickstoff, Kohlendioxid und Wasser enthält.

Erfindungsgemäß wird der das Brennstoffzellen-System verlassende Wasserstoff mittels eines dem Brennstoffzellen-System nachgeschalteten katalytischen Brenners zumindest bis auf eine unkritische Menge entfernt. Als eine unkritische Menge wird eine Wasserstoffkonzentration von höchstens 40%, bevorzugt höchstens 20%, der unteren Explosionsgrenze (UEG) betrachtet.

Der katalytische Brenner ist irgendein konventioneller katalytischer Brenner, beispielsweise mit Platin als Katalysatormetall auf einem Keramikträgermaterial. Der Brenner kann ein rohrförmiger Reaktor mit monolithischem, platinbeschichteten Katalysatorträger oder ein Reaktor mit einer Katalysatorschüttung sein. Erfindungsgemäß ist die Art des katalytischen Brenners jedoch nicht beschränkt, und auch andere Materialien und Formen sind verwendbar.

Das Anodenabgas aus dem Brennstoffzellen-System wird über einen Zuführweg als ein erstes Brennerspeisegas in den katalytischen Brenner eingespeist. Sauerstoff oder ein Sauerstoff enthaltendes Gas, in der Praxis gewöhnlich Luft, wird als ein zweites Brennerspeisegas in den Brenner eingespeist. Während des Betriebs der Anlage stellt sich im katalytischen Brenner durch die exotherme Reaktion einerseits und die kühlende Luftströmung andererseits eine bestimmte Temperatur ein. Ist die Temperatur zu niedrig, um in der zur Verfügung stehenden Reaktionszeit, d.h. der Gasverweilzeit im Brenner, eine vollständige Umsetzung des Wasserstoffs zu erlauben oder, anders ausgedrückt, ist die Verweilzeit im Brenner zu gering, um bei der gegebenen Brennertemperatur eine vollständige Umsetzung des Wasserstoffs zu erlauben, enthält das den Brenner verlassende Abgas noch zu viel Restwasserstoff. Bei einer zu hohen Wasserstoffkonzentration, typischerweise über 40% UEG, wird die Anlage automatisch abgeschaltet. Um dies zu verhindern, wird die Brennertemperatur mittels Temperatursensor ermittelt und in Abhängigkeit von der ermittelten Temperatur die Gasverweilzeit im Brenner so eingestellt, dass eine ausreichende Wasserstoff-Umsetzung erfolgt. "Ausreichend" bedeutet in diesem Zusammenhang, dass die Wasserstoffkonzentration höchstens 40%, bevorzugt höchstens 20%, besonders bevorzugt höchstens 10%, der UEG beträgt. Die Einstellung der Gasverweilzeit erfolgt am zweckmäßigsten durch entsprechende Regulierung des den Brenner mit Luft versorgenden Gebläses. Eine Verringerung der Luftzufuhr erhöht die Gasverweilzeit im Brenner und verringert die Auskühlung durch die Luftströmung, erhöht also sowohl die für die Reaktion zur Verfügung stehende Zeit als auch, bedingt durch die Temperaturerhöhung, die Reaktionsgeschwindigkeit.

Bei Inbetriebnahme der Anlage nach einer gewissen Standzeit ist der katalytische Brenner kalt; je nach Standort der Anlage kann er beispielsweise Raumtemperatur oder eine noch wesentlich darunter liegende Temperatur haben. Die Reaktionsgeschwindigkeit der Umsetzung des Wasserstoffs ist entsprechend gering. Trotzdem muss ab Inbetriebnahme Abgas-Wasserstoff in Mengen oxidiert werden, wie sie auch im laufenden Betrieb bei heißem Brenner anfallen. Um dies zu erreichen, wird erfindungsgemäß die Brennertemperatur schnell genug auf einen Wert gebracht, der bei der jeweiligen Systemauslegung und den jeweiligen Betriebsbedingungen eine ausreichende Wasserstoff-Oxidation gewährleistet.

Zur Erzielung dieses schnellen Anstiegs der Brennertemperatur stellt die vorliegende Erfindung mehrere Varianten bereit, die einzeln oder in Kombination angewendet werden können.

Gemäß einer Variante wird der Oxidationsluftstrom so klein gewählt, dass er den anfallenden Wasserstoff gerade oxidieren kann, aber mit der Luft kaum Wärme aus dem Brenner ausgetragen wird. Die Einstellung des Luftstroms kann beispielsweise über eine Regelung der Luftgebläseleistung in Abhängigkeit von der ermittelten Brennertemperatur erfolgen.

Typischerweise werden die Brennstoffzellen bezüglich Wasserstoff im Dead-End-Betrieb betrieben, d.h. es wechseln Phasen, in denen kein Anodenabgas in den Brenner gelangt, mit Spülphasen, in denen verhältnismäßig große Mengen Wasserstoff umgesetzt werden müssen.

Während des Spülens ist mindestens die der Reaktionsstöchiometrie entsprechende Menge Sauerstoff erforderlich. Zwischen den einzelnen Spülstößen kann der Luftstrom jedoch unterbrochen oder zumindest verringert werden, so dass keine Wärme aus dem Brenner ausgetragen wird. Zur Unterbrechung oder Verringerung des Luftstroms ist eine entsprechende Sperrung oder Regelung im Zuführweg für das zweite Brennerspeisegas vorgesehen. Die Steuer/Regel-Einrichtung gibt die Zuführung von zweitem Brennerspeisegas zu dem katalytischen Brenner frei wenn das Brennstoffzellen-System mit Wasserstoff oder einem anderen Spülgas gespült wird, und verringert oder unterbricht die Zuführung des zweiten Brennerspeisegases zu dem katalytischen Brenner, wenn ein Spülvorgang beendet ist. Auch eine Umleitung des Luftstroms kann erfolgen. Zur Umleitung des Luftstroms wird ein fest eingestellter oder ein in seiner Menge variabler Bypass vorgesehen, durch den der gesamte Luftstrom oder ein Teil des Luftstroms am Brenner vorbei direkt in die Abgasleitung der Anlage eingebracht wird. Die vollständige oder teilweise Umleitung des Luftstroms durch den Bypass bringt den Effekt mit sich, dass durch die fehlende oder reduzierte Luftströmung im Brenner der Wärmeaustrag aus dem Brenner minimiert wird. Zusätzlich kann durch die Zumischung von Luft zu dem Brennerabgas das Abgas verdünnt und damit die Wasserstoffkonzentration darin herabgesetzt werden. Dazu wird über eine bei Bedarf zuschaltbare Leitung weitere Zusatzluft in das Abgas eingespeist.

Die Umleitung des zweiten Brennerspeisegases, d.h. von Luft oder eines anderen Sauerstoff enthaltenden Gases, durch den Bypass kann alternativ nur in den Phasen des Dead-End-Betriebs der Brennstoffzellen eingesetzt werden oder auch während der Spülphasen dazu benutzt werden, dem Brenner nur die stöchiometrisch erforderliche Menge Luft zuzuführen und die übrige Luft am Brenner vorbei direkt in das Abgas des Systems einzubringen.

Bevorzugt wird bei Inbetriebnahme der Anlage, d.h. bei kaltem katalytischem Brenner, während der Dead-End-Phasen dem Brenner keine Luft zugeführt und während der Spülstoß-Phase nur die stöchiometrisch erforderliche Menge Luft in den Brenner eingebracht. Wenn ein Brenner-Bypass vorgesehen ist, ist keine Verringerung des Luftstroms erforderlich, vielmehr wird die Hauptmenge der Luft direkt ins Brennerabgas geführt und sorgt dafür, dass auch bei einer suboptimalen Funktion des Brenners die Wasserstoffkonzentration im Abgas gering bleibt. Systemabschaltungen aufgrund überhöhter Wasserstoffkonzentration im Abgas können dadurch vermieden werden.

Alternativ oder zusätzlich zu den oben beschriebenen Varianten kann der "Kaltstart" des Brenners verbessert werden, indem er unterstützend beheizt wird. Zur unterstützenden Beheizung wird vor oder bei Inbetriebnahme der Anlage eine geringe Menge eines weiteren Brennerspeisegases stoßweise oder kontinuierlich in den Brenner eindosiert. Außerdem wird über den Luftstrom die für die Reaktion erforderliche Menge Sauerstoff, bevorzugt eine stöchiometrische Menge Sauerstoff, bereitgestellt. Die Menge dieses dritten Brennerspeisegases sollte so bemessen sein, dass sie auch im kalten Brenner zumindest nahezu vollständig abreagiert und ihn auf die erforderliche Temperatur erwärmt. Als zusätzliches Brennerspeisegas kommt Wasserstoff in Frage, der über eine von dem Brennstoffzellen-System unabhängige Zuführung eingespeist wird, aber auch alle anderen Brennstoffe, die im katalytischen Brenner mit Luft exotherm reagieren und ein inertes Produkt bilden, sind prinzipiell geeignet. Beispiele sind Methan, Propan, Butan, etc., wie sie bei Reformatsystemen zur Verfügung stehen, außerdem flüssige Brennstoffe wie Benzin, Methanol, etc.

Ebenfalls möglich sind externe Vor- oder Zusatz-Heizungen, die beispielsweise elektrisch oder in Form eines Brenners zu realisieren sind, und bei denen der katalytische Brenner direkt oder über eine Luftvorwärmung erwärmt wird. Derartige externe Beheizungen erfordern jedoch einen höheren apparativen Aufwand und sind daher weniger favorisiert.

Die Einstellung der erforderlichen Brennertemperatur, insbesondere in der Startphase der Anlage, wird also erfindungsgemäß erzielt durch Überwachung und Optimierung der Temperatur des katalytischen Brenners durch temperaturabhängige zeitliche und/oder mengenmäßige Variation der Zuführung von zweitem Brennerspeisegas und/oder drittem Brennerspeisegas zu dem katalytischen Brenner, ggf. in Kombination mit einer Überwachung des Wasserstoffgehalts des in die Umgebung zu entlassenden Brennerabgases und Optimierung der Temperatur des katalytischen Brenners bei Überschreitung des zulässigen Wasserstoffgehalts.

Eine Möglichkeit, die Zuführung der Medien erstes Brennerspeisegas, zweites Brennerspeisegas und drittes Brennerspeisegas den Erfordernissen entsprechend zu variieren, ist mittels Temperatursensor im katalytischen Brenner und ggf. mittels Wasserstoffsensor im Brennerabgas in Verbindung mit Einrichtungen zum Regeln der Zuführmengen der Medien in den Zuführwegen und Einrichtungen zu deren Ansteuerung in Abhängigkeit von der ermittelten Brennertemperatur und ggf. von dem ermittelten Wasserstoffgehalt.

Gemäß einer bevorzugten Ausführungsform wird der katalytische Brenner vor oder bei Inbetriebnahme der Anlage sofort auf die für eine ausreichende Wasserstoff-Umsetzung erforderliche Mindesttemperatur gebracht durch zeitliche und/oder mengenmäßige Variation der Zuführung von zweitem und/oder drittem Brennerspeisegas in Abhängigkeit von der ermittelten Brennertemperatur, besonders bevorzugt durch Variation der Zuführung von zweitem Brennerspeisegas. Erforderlichenfalls wird dem Brennerabgas zusätzliche Luft zugeführt, um das Abgas zu verdünnen. Die für eine Anlage jeweils erforderliche Brennertemperatur und ggf. Luftzumischung zu dem Brennerabgas während der Anlaufphase ist durch vorausgehende Versuche zu ermitteln. Nach Erreichen der Mindesttemperatur des Brenners wird die Temperatur durch zeitliche und/oder mengenmäßige Variation von zweitem und/oder drittem Brennerspeisegas weiter auf den optimalen Wert erhöht. Ein Wasserstoff-Sensor im Brennerabgasweg dient lediglich der Absicherung, um bei Überschreitung des zulässigen Wasserstoffgehalts im Brennerabgas die Anlage abzuschalten.

Gemäß einer weiteren bevorzugten Ausführungsform erfolgt eine kombinierte Regelung der zeitlichen und/oder mengenmäßigen Zuführung von zweitem und/oder drittem Brennerspeisegas in Abhängigkeit von der Brennertemperatur und vom Wasserstoffgehalt des Brennerabgases. Normalerweise werden die Regler für die Zuführung von zweitem und drittem Brennerspeisegas in Abhängigkeit von der ermittelten Brennertemperatur angesteuert. Erreicht der Wasserstoffgehalt im Abgas jedoch einen bestimmten Wert, z.B. 10% UEG, werden die Regler durch eine mit dem Wasserstoff-Sensor im Brennerabgasweg gekoppelte Steuereinrichtung angesteuert, um eine Erhöhung der Brennertemperatur einzuleiten.

Die oben genannten Varianten des Betriebs der Brennstoffzellen-Anlage in der Startphase können jede für sich oder in Kombinationen von zwei oder mehreren der Varianten eingesetzt werden.

Während in der Anlaufphase der Anlage Probleme aufgrund einer zu niedrigen Brennertemperatur bestehen, tritt bei laufendem Betrieb der Anlage eher der umgekehrte Fall auf, d.h. die Temperatur im Brenner kann auf unerwünscht hohe Werte ansteigen, und es kann insbesondere zu lokalen Überschreitungen der erwünschten Temperatur kommen. Eine hohe Brennertemperatur hat wiederum eine hohe Abgastemperatur zur Folge, woraus sich Gefährdungen ergeben können.

Erfindungsgemäß wird daher auch im laufenden Betrieb der Brennstoffzellen-Anlage die Temperatur des Brenners überwacht und geregelt. Ergibt die Überwachung ein zu starkes Ansteigen der Temperatur, kann der Strom des Oxidationsgases erhöht und dadurch der Wärmeabtransport beschleunigt werden. Der Nachteil dabei ist, dass höhere Gebläseleistungen erforderlich sind und große Mengen heißer Abgase entstehen. Bevorzugter ist daher die Regelung der Brennertemperatur durch Zuführung einer kontrollierten Menge Wasser zu dem katalytischen Brenner.

Beim Betrieb von Brennstoffzellen fällt stets auch eine gewisse Menge Produktwasser an, das flüssig und/oder als Aerosol vorliegt. Die Hauptmenge des Produktwassers befindet sich im Kathodenabgas, aber auch im übrigen Abgas der Brennstoffzellen kann Wasser enthalten sein. Es ist wünschenswert, dieses Wasser zu verdampfen, um einen Ausstoß von flüssigem Wasser mit dem Abgas zu vermeiden. Gleichzeitig wird die Verdunstungskälte des Wassers zur Kühlung des Brenners genutzt. Zur Kühlung des Brenners mittels Produktwasser werden die Produktwasser enthaltenden Abgase der Brennstoffzellen, oder zumindest die den Hauptteil des Produktwassers enthaltenden Abgase der Brennstoffzellen, in den katalytischen Brenner eingebracht, und das Wasser verdampft. Alternativ oder zusätzlich kann Wasser aus einem separaten Vorratsbehälter in den Brenner eindosiert werden.

Eine effiziente Kühlung wird durch eine gleichmäßige Verteilung des Wassers über die Querschnittsfläche des Brenners begünstigt. Dies kann dadurch erfolgen, dass das Wasser in eine Gaszuführung eingebracht wird und ein poröser Körper, wie beispielsweise ein poröser Keramikschaumkörper oder eine Schüttung aus einem porösen Material, in die Gaszuführung eingebaut wird. Alternativ kann das Wasser auch durch Düsen in den Brenner eingespritzt werden, wobei es fein verteilt wird. Die große Oberfläche, die durch die Passage durch poröses Material oder durch Versprühen geschaffen wird, beschleunigt die Verdunstung und verbessert dadurch die Kühlung.

Wenn zur Kühlung Wasser aus einem separaten Vorratsbehälter verwendet wird, wird das Wasser bevorzugt mit dem Oxidationsgas in den Brenner eingebracht. Der poröse Körper oder die Düsen zur Erzeugung einer großen Oberfläche des Wassers befinden sich dann in der Oxidationsgaszuführung, bevorzugt in unmittelbarer räumlicher Nähe zum Brenner. Produktwasser kann ebenfalls auf dem Weg über die Oxidationsgaszuführung eingebracht werden oder auch unmittelbar mit dem Brennstoffzellenabgasstrom. In diesem Fall befinden sich der poröse Körper oder die Düsen in der Zuführung des Brennstoffzellenabgases zum Brenner.

Die Varianten zur Kühlung des katalytischen Brenners können alleine oder in Kombination angewendet werden. Auch eine Kombination mit dem erfindungsgemäßen schnellen Aufheizen des Brenners ist möglich.

Zusätzlich oder alternativ zur Temperatur des katalytischen Brenners wird erfindungsgemäß die Temperatur des Brennerabgases überwacht und geregelt. Die Kühlung heißer Brennerabgase erfolgt durch Zuführung und Verdampfung von Wasser (Produktwasser und/oder separates Wasser) wie oben für die Kühlung des Brenners beschrieben, wobei das Wasser jedoch dem Brennerabgasstrom zugeführt wird. Die Zuführung kann beispielsweise durch direktes Einspritzen über Düsen erfolgen oder über eine Luftzuführung wie den vorher erwähnten Bypass oder einen zusätzlichen Weg zur Luftzuführung. Bei der Wasserzuführung über einen Luftzuführweg wird dieser bevorzugt mit einem porösen Körper zur besseren Verteilung des Wassers ausgestattet.

Die Kühlung des Brenners und die Kühlung des Brennerabgases können in Abhängigkeit vom Betriebszustand des Brenners kombiniert werden. Bevorzugt werden sie mit dem erfindungsgemäßen raschen Aufheizen des Brenners in der Anlaufphase kombiniert.

Wenn die im Brenner umzusetzende Wasserstoffmenge zeitlich schnell variiert - beispielsweise durch "Spülstöße", wie sie erforderlich sind, wenn die Brennstoffzellen im Dead-End-Modus betrieben werden - kann es zu kurzzeitigen Temperaturspitzen im Brennerabgasstrom kommen, die durch die momentane Umsetzung des Wasserstoffs im Moment des Spülens bedingt sind. In den Intervallen zwischen den Spülvorgängen wird dagegen kein Wasserstoff in den Brenner eingebracht, während die Oxidationsluft weiter durch den Brenner strömt, so dass der Brenner durch diese Luftströmung gekühlt wird und die Abgastemperatur relativ niedrig ist. Eine geringfügige Erhöhung der Abgastemperatur während dieser Intervalle ist daher in der Regel tolerabel.

Gemäß einer Variante der erfindungsgemäßen Regelung der Abgastemperatur wird ein Ausgleich der Abgastemperaturen, die in unterschiedlichen Betriebsphasen anfallen, durchgeführt und dadurch die Spitzen in der Abgastemperatur abgeschwächt. Zu diesem Zweck wird in dem Brennerabgasweg hinter dem Brenner ein Festkörper oder eine Festkörperschüttung angeordnet, um die thermische Trägheit des Systems zu erhöhen. Dafür geeignet sind temperaturbeständige Materialien mit hoher Wärmekapazität. Während des Spülens der Brennstoffzellen, wenn die maximale Abgastemperatur erreicht wird, strömt das heiße Abgas durch das Material, wobei dieses sich erwärmt und dem Abgas Energie entzieht, es also abkühlt. Nach dem Spülen, wenn der katalytische Brenner und das Material im Abgasweg nur von Luft durchströmt werden, kühlen sich sowohl Brenner als auch das Material wieder ab, wobei das Abgas nun geringfügig erwärmt wird. Beim nächsten Spülstoß kann das abgekühlte Material dann wieder Enthalpie aufnehmen. Die verschiedenen Varianten können alleine oder in Kombination von zwei oder mehreren angewendet werden.

Eine weitere Möglichkeit, die Temperatur im katalytischen Brenner und/oder im Brennerabgas zu regeln, besteht im Einbau eines Wärmetauschers in den Brenner und/oder in den Abgasweg des Brenners. Ein derartiger Wärmetauscher erlaubt es, den Brenner bzw. das Abgas abzukühlen und/oder nutzbare Wärme zu gewinnen.

Auch wenn der katalytische Brenner eine Durchschnittstemperatur aufweist, die im optimalen Bereich liegt, kann es zu gefährlichen lokalen Temperaturüberschreitungen kommen. Der Grund dafür ist, dass an den Stellen, an denen die gemischten Reaktionsgase auf den Katalysator treffen, durch den lokal hohen volumenspezifischen Umsatz Temperaturspitzen erreicht werden können, die die Zündtemperatur von Wasserstoff überschreiben. Wenn sich in dem Brenner ein Gemisch befindet, dessen Zusammensetzung innerhalb der Explosionsgrenze für Wasserstoff-Luft-Gemische liegt, kann dies zur Zündung des Gemisches und explosionsartiger Reaktion der Gase führen. Zur Vermeidung eines solchen Betriebsverhaltens wird erfindungsgemäß für eine gleichmäßigere Temperaturverteilung innerhalb des katalytischen Brenners gesorgt. Die Einstellung der gleichmäßigen Temperaturverteilung erfolgt unabhängig von der Überwachung und Regelung der Durchschnittstemperatur des katalytischen Brenners und ist gleichzeitig oder alternativ dazu möglich.

Bei konventionellen katalytischen Brennern gibt es typischerweise für jedes Brennerspeisegas, z.B. für Wasserstoff und Luft, jeweils nur eine Zuführung. Der Hauptumsatz findet an der Stelle statt, an der die Reaktionsgase in den Brenner eintreten, also in einem relativ kleinen Bereich des Brenners. In diesem Bereich wird erheblich mehr Wärmeenthalpie frei als im übrigen Brenner.

Erfindungsgemäß wird nun die Freisetzung der Wärmeenthalpie über die gesamte Ausdehnung des Brenners verteilt, indem die Zuführstellen eines Brennerspeisegases, bevorzugt des Wasserstoffs, variiert werden. Dabei wird der katalytische Brenner gleichsam in mehrere Reaktionszonen aufgeteilt, wobei nur eines der Brennerspeisegase, bevorzugt die Luft, sämtliche Reaktionszonen nacheinander passiert, während die Zudosierung des anderen Brennerspeisegases, bevorzugt des Wasserstoffs, an verschiedenen Stellen des Brenners erfolgt. Dies führt zu einer besser über den gesamten Katalysator des Brenners verteilten Reaktion, während die frei werdende Enthalpie an der jeweiligen Reaktionsstelle durch die geringere Wasserstoffkonzentration deutlich geringer ist. Ein Maximum der Reaktionsdichte am Eingang des Brenners wird vermieden. Somit kommt es nicht zu einer ausgeprägten Temperaturspitze am Eingang des Brenners, sondern zu erheblich geringeren Temperaturspitzen am Eingang einer jeden Reaktionszone des Brenners. Die Reaktionswärme fällt über die gesamte Ausdehnung des Brenners verteilt an, und Temperaturspitzen, die eine Zündung des Gemisches zur Folge haben könnten, werden nicht erreicht.

Alternativ kann auch das wasserstoffreiche Brennstoffzellenabgas an einer einzigen Stelle zugeführt und durch den gesamten Brenner geführt werden, während die Reaktionsluft stufenweise in mehreren Reaktionszonen zudosiert wird. Diese Variante ist jedoch weniger vorteilhaft, da der größte Teil der frei werdenden Wärme über die Abluft ausgetragen wird und somit an der Zuführstelle des wasserstoffreichen Brennstoffzellenabgases, bedingt durch die niedrigen Gasvolumenströme, möglicherweise keine ausreichende Kühlung erfolgt. Die Regelung der Temperaturverteilung kann für sich alleine erfolgen oder in Kombination mit einer oder mehreren der vorgenannten Betriebsweisen erfolgen.

In der Regel ist es ausreichend, nur das Abgas aus dem Anodenbereich des Brennstoffzellen-Systems im katalytischen Brenner zur Entfernung von Wasserstoff zu behandeln. Bevorzugt werden jedoch alle potenziell wasserstoffhaltigen Gasströme, besonders bevorzugt auch Gasströme, die andere brennbare Gase enthalten könnten, durch Reaktion im katalytischen Brenner von Wasserstoff befreit. Derartige Gase sind neben dem Anodenabgas insbesondere das Kathodenabgas, das im Fall eines Lecks in einer Polymerelektrolytmembran Wasserstoff beinhalten kann, sowie die aus einem Containment, das die Brennstoffzellenstapel oder das gesamte System bevorzugt von der Umgebung abkapselt, abgesaugte Luft, die im Falle eines Lecks im Rohrleitungssystem oder den Brennstoffzellenstapeln mit Wasserstoff kontaminiert sein kann. Werden all diese Gase erst nach Vermischung mit Luft und Passieren eines katalytischen Brenners an die Umgebung abgegeben, können selbst im Fall einer Undichtigkeit im Brennstoffzellensystem oder innerhalb eines Stapels keine nennenswerten Mengen Wasserstoff an die Umgebung abgegeben werden. Auch die beim gelegentlich erforderlichen Spülen des Brennstoffzellensystems und des die Brennstoffzellenstapel umgebenden Raums zum Zweck der Inertisierung anfallenden Gasmengen (üblicherweise wird mit einem Inertgas wie z.B. Stickstoff oder Argon gespült) werden bevorzugt mit Luft dem katalytischen Brenner zugeführt, um eventuell darin enthaltenen Wasserstoff zu beseitigen.

Die vorliegende Erfindung wird nun anhand von Zeichnungen erläutert, wobei
Fig. 1 das Oxidationsverhalten eines katalytischen Brenners bei verschiedenen Temperaturen zeigt,
Fig. 2 eine Ausführungsform einer erfindungsgemäßen Brennstoffzellen-Anläge zeigt,
Fig. 3 einen katalytischen Brenner einer erfindungsgemäßen Brennstoffzellen-Anlage mit variierten Zuführstellen für Brennstoffzellen-Abgas zeigt,
Fig. 4 eine Anlage mit Gesamtgasreinigung zeigt, und
Fig. 5 einen Gabelstapler mit einer erfindungsgemäßen Brennstoffzellen-Anlage zeigt.

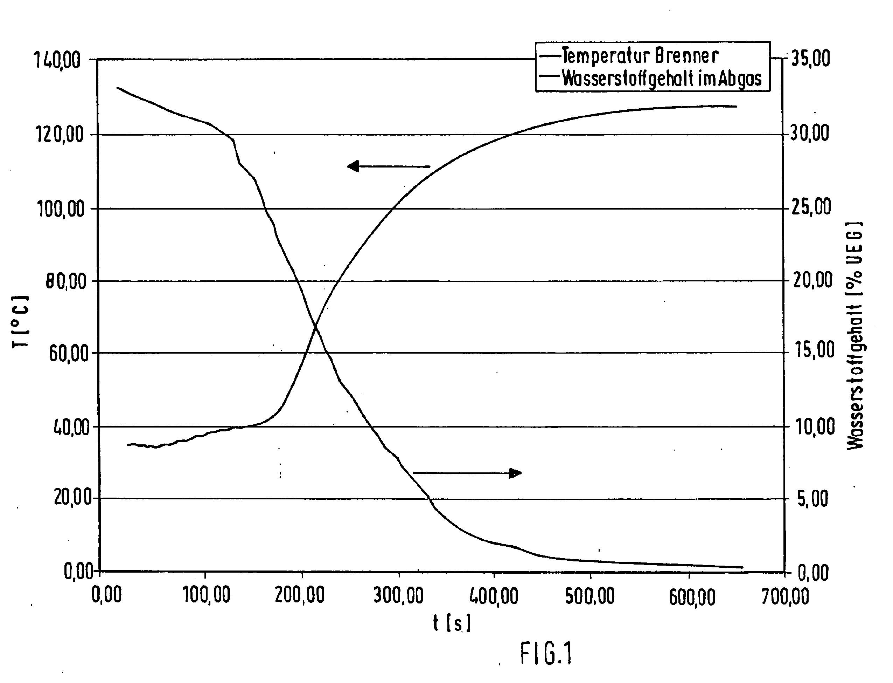

Fig. 1 zeigt das Ergebnis eines Versuchs, bei dem ein katalytischer Brenner bei steigenden Temperaturen mit Luft und Wasserstoff beaufschlagt wurde. Der Brenner bestand aus einem Brennermonolithen aus Cordierit (einer Al₂O₃-Modifikation), dessen Oberfläche mit Platin-Nanopartikeln besetzt war. Der Brenner besaß 900 quadratische Kanäle pro square inch, was ca. 140 Kanälen pro cm² entspricht. Der zylindrische Monolith besaß einen Durchmesser von ca. 100 mm und eine Länge von ca. 100 mm. Der Monolith war in ein Metallrohr eingebaut und wurde von einem definierten Luftstrom durchströmt, dem in Nachbildung des Spülvorgangs in einem Brennstoffzellensystem kurzzeitig Wasserstoff zudosiert wurde. Der Luftstrom betrug konstant 17 Nm³/h. Wasserstoff wurde intervallweise alle 20 s, entsprechend einer Brennstoffzellen-Spülfre quenz von einem Spülstoß pro 20 s, und jeweils in einer Menge von ca. 0,9 l eingespeist. Gemessen wurden neben dem Luftstrom die Temperatur des Abgases sowie dessen Wasserstoffgehalt. Da der verwendete Thermofühler eine Ansprechzeit T₉₀ (Zeit, in der 90% einer plötzlichen Temperaturveränderung detektiert werden) von etwa 10 s besaß, können die gemessenen Temperaturen lediglich als Mittelwerte betrachtet werden. Die unmittelbar nach dem Spülen auftretenden Temperaturspitzen dürften erheblich höher sein. Der Wasserstoffgehalt des Abgases des katalytischen Brenners ist in Prozent der UEG (untere Explosionsgrenze) angegeben. 100% UEG entsprechend 4 Vol-% Wasserstoff in Luft. Die Konzentrationen sind Maximalwerte, wie sie kurz nach dem Spülen im Brennerabgas gemessen werden. Zwischen den einzelnen Spülstößen sinkt der Wasserstoffgehalt im Brennerabgas auf null.

Aus der Kurve ist ersichtlich, dass unterhalb einer bestimmten Mindesttemperatur keine nennenswerte Umsetzung von Wasserstoff stattfindet. Im vorliegenden Fall kann eine zeitlich gemittelte Brennertemperatur (über das Brennerabgas gemessen) von ca. 40°C als eine Mindesttemperatur abgelesen werden. Zur Vermeidung unzulässiger Wasserstoffemissionen bei Inbetriebnahme einer Brennstoffzellen-Anlage in kalter Umgebung ist daher das erfindungsgemäße, ggf. unterstützte, rasche Aufheizen des katalytischen Brenners erforderlich.

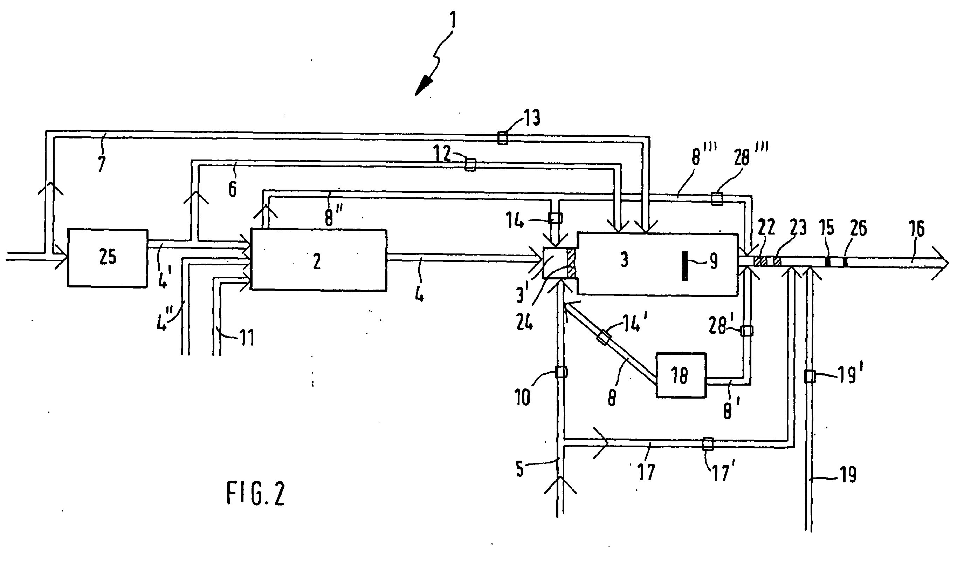

Fig. 2 zeigt eine beispielhafte Ausführungsform einer erfindungsgemäßen Brennstoffzellen-Anlage 1. Die Anlage weist ein Brennstoffzellen-System 2, bestehend aus einem Brennstoffzellenstapel mit einer Mehrzahl von Polymerelektrolytmembran-Brennstoffzellen, und einen katalytischen Brenner 3 auf. Der katalytische Brenner 3 wird gespeist mit Anodenabgas aus dem Brennstoffzellen-System 2, das ihm über den Zuführweg 4 zugeführt wird, und Luft, die ihm über den Zuführweg 5 zugeführt wird. In einer Mischkammer 3' werden die Gase vorgemischt. Das Brennstoffzellen-System 2 wird entweder im Dead-End-Betrieb betrieben mit Wasserstoff, den es über den Zuführweg 4" aus einem Wasserstoffvorrat (nicht gezeigt) erhält, oder im Durchströmungsbetrieb mit Wasserstoff, den es aus dem Reformer 25 erhält, und mit Luft, die durch den Brennstoffzellenstapel strömt (nicht gezeigt). Dem katalytischen Brenner 3 kann über einen Zuführweg 6 mit einem Regler 12 zusätzlicher Wasserstoff zugeführt werden und über einen Zuführweg 7 mit einem Regler 13 Reformerspeisegas zugeführt werden. Der Luftzuführweg 5 besitzt einen Regler 10 und ist mit einem Bypass 17 mit Regler 17' ausgestattet, durch den die Luft am Brenner vorbei direkt in den Brennerabgasweg 16 eingespeist werden kann. Die Regler regeln den Durchfluss der Medien in den jeweiligen Zuführwegen bzw. sperren den Zufluss ab. Über eine Zuführung 11 kann das Brennstoffzellensystem 2 ggf. mit Inertgas gespült werden.

Bei Inbetriebnahme der Anlage ist der katalytische Brenner 3 kalt, beispielsweise bei einem im Winter im Freien geparkten Fahrzeug. In diesem Zustand oxidiert der katalytische Brenner kaum Wasserstoff und ist nahezu nutzlos. Ein Wasserstoffsensor 26 im Brennerabgasweg 16 ermittelt eine unzulässig hohe Wasserstoffkonzentration im Brennerabgas, und das System würde aus Sicherheitsgründen abgeschaltet werden. Um dies zu vermeiden werden erfindungsgemäß Maßnahmen getroffen, die Temperatur in dem katalytischen Brenner 3 sehr schnell auf einen Wert zu erhöhen, der eine effiziente Oxidation des Wasserstoffs erlaubt.

Die Temperatur im katalytischen Brenner wird mittels eines Temperatursensors 9 überwacht. Der Temperatursensor 9 ist mit einer Steuereinrichtung gekoppelt, die bei einer Unterschreitung der Mindesttemperatur des katalytischen Brenners den Regler 12 oder 13 ansteuert, um dem Brenner zusätzlich Wasserstoff bzw. Reformerspeisegas zuzuführen und ihn dadurch zu beheizen. Außerdem wird die Luftzufuhr zum Brenner durch Ansteuerung des Reglers 10 und/oder durch Umleitung über den Bypass 17 verringert. Die Mengen an Heizgas (Wasserstoff, Reformerspeisegas) und Luft müssen so bemessen sein, dass eine vollständige Umsetzung gewährleistet ist.

Werden die Brennstoffzellen im Dead-End-Betrieb betrieben, gelangt zwischen den Spülstößen kein Wasserstoff in den Brenner 3. Daher wird erfindungsgemäß zur Vermeidung eines Wärmeaustrags aus dem Brenner während dieser Intervalle die Luftzuführung zu dem Brenner durch den Regler 10 gesperrt und nur während der Spülstöße geöffnet.

Nachdem der Wasserstoffgehalt im Brennerabgas den gewünschten niedrigen Wert erreicht hat und die Temperatur im katalytischen Brenner für eine effiziente Wasserstoff-Umsetzung ausreichend hoch ist, wird der Brenner mit Anodenabgas (Zuführweg 4) und Luft (Zuführweg 5) betrieben. Der Temperatursensor 9 überwacht die Temperatur im katalytischen Brenner. Wird sie durch die exotherme Umsetzung zu hoch, wird Wasser aus einem Vorratsbehälter 18 oder Produktwasser aus dem Betrieb der Brennstoffzellen zur Kühlung in den Brenner eingespeist. Die Einspeisung erfolgt durch Ansteuerung eines Reglers 14' im Wasserzuführweg 8 oder durch Ansteuerung eines Reglers 14 im Produktwasser-Zuführweg 8". Um eine besonders feine Verteilung des Wassers und damit eine gute Kühlwirkung zu erzielen, ist in der Mischkammer 3' ein poröses Material 24 vorgesehen, durch das das Wasser hindurch tritt.

Im Brennerabgasweg 16 befindet sich ein Temperatursensor 15 zur Überwachung der Temperatur des an die Umgebung abgegebenen Gases. Erreicht die Temperatur des Abgases einen unzulässig hohen Wert, wird über eine mit dem Temperatursensor 15 gekoppelte Steuereinrichtung die Einspeisung von Wasser in das Brennerabgas eingeleitet. Dazu wird der Regler 28' in dem Wasserzuführweg 8', der Wasser aus dem Vorratsbehälter 18 zu dem Brennerabgasweg 16 führt, oder der Regler 28'" in dem Produktwasser-Zuführweg 8'" angesteuert und bis zum Erreichen der gewünschten Abgastemperatur Wasser eingespeist.

Der Brennerabgasweg 16 besitzt einen separaten Luftzuführweg 19, über den bei Bedarf zusätzliche Luft in den Brennerabgasweg 16 eingespeist werden kann. Zusätzliche Luft wird eingespeist, wenn die Abgastemperatur zu hoch ist oder wenn der Wasserstoffgehalt des Abgases zu hoch ist. Dann wird der Regler 19' von der mit dem Temperatursensor 15 gekoppelten Steuereinrichtung bzw. von der mit dem Wasserstoffsensor 26 gekoppelten Steuereinrichtung angesteuert und geöffnet.

Außerdem sind in dem Brennerabgasweg 16 ein poröses Material 22, durch das Wasser im Brennerabgasweg hindurch tritt und fein verteilt wird, sowie ein Material 23 vorgesehen, das durch seine thermische Trägheit Spitzen in der Abgastemperatur abschwächt.

Bevorzugt ist der Wasserstoffsensor 26 mit einer Einrichtung zum Einleiten einer Verringerung des Wasserstoffgehalts des Brennerabgases durch Erhöhung der Brennertemperatur gekoppelt. Überschreitet der Wasserstoffgehalt im Brennerabgas einen vorgegebenen Wert, steuert diese Einrichtung den Regler 12 oder 13 an, und dem Brenner wird zusätzlich Wasserstoff bzw. Reformerspeisegas zugeführt und der Brenner dadurch beheizt. Außerdem wird die Luftzufuhr zum Brenner durch Ansteuerung des Reglers 10 oder durch Umleitung über den Bypass 17 verringert. Die Mengen an Heizgas (Wasserstoff, Reformerspeisegas) und Luft müssen jedoch so bemessen sein, dass eine vollständige Umsetzung gewährleistet ist.

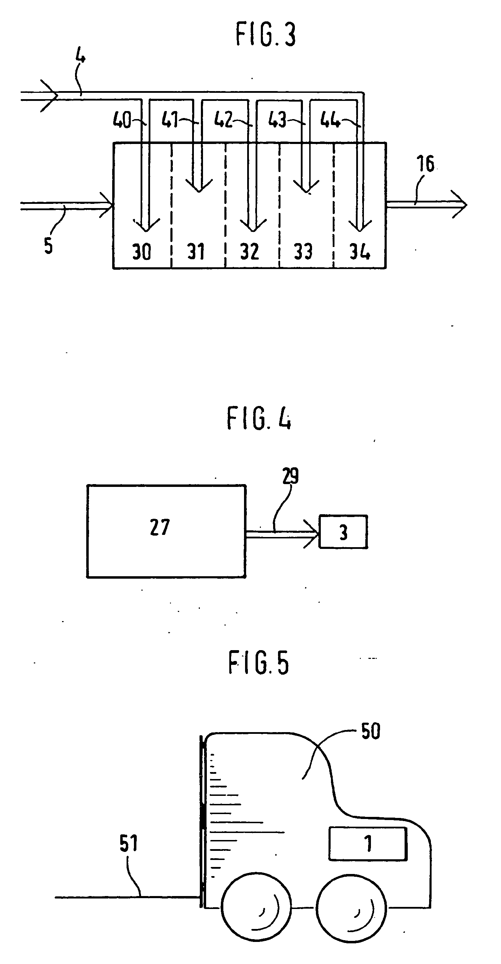

Fig. 3 zeigt, wie die Temperatur des katalytischen Brenners durch Variation der Zuführstelle des ersten Brennerspeisegases beeinflusst werden kann. Das erste Brennerspeisegas ist Anodenabgas, das über einen Zuführweg 4 mit Abzweigungen 40, 41, 42, 43 und 44 über den gesamten Brenner 3 verteilt zugeführt wird. Das zweite Brennerspeisegas, Luft, wird über einen einzigen Zuführweg 5 in den katalytischen Brenner eingespeist und durch den gesamten Brenner geführt. Dadurch ergeben sich im Brenner Reaktionsbereiche 30, 31, 32, 33 und 34, in denen jeweils nur eine kleine Menge Wasserstoff umgesetzt wird, aber die gesamte Luft zur Kühlung zur Verfügung steht. Dies bewirkt eine bessere Temperaturverteilung im katalytischen Brenner.

Fig. 4 zeigt eine erfindungsgemäße Brennstoffzellen-Anlage, bei der sämtliche Gase, die Wasserstoff oder ein anderes brennbares Gas enthalten können, durch den katalytischen Brenner 3 geführt werden. Zu diesem Zweck wird das gesamte Brennstoffzellen-System mit sämtlichen Leitungen und Zusatzeinrichtungen wie z.B. Reformer von einem Behälter 27 umgeben. Ein Zuführweg 29 führt sämtliche den Behälter 27 verlassenden Gase vor ihrer Entlassung in die Umwelt durch einen katalytischen Brenner 3.

Fig. 5 zeigt einen Gabelstapler 50 mit erfindungsgemäßer Brennstoffzellen-Anlage 1. Die Brennstoffzellen-Anlage 1 dient sowohl dem Antrieb des Gabelstaplers als auch der Betätigung seiner Hebevorrichtung 51.

Die vorliegende Erfindung erlaubt es, den katalytischen Brenner schnell auf eine für eine ausreichende Wasserstoff-Umsetzung erforderliche Mindesttemperatur zu bringen, die Temperaturverteilung im Brenner zu regeln, eine optimale Brennertemperatur einzuhalten, den Wasserstoffgehalt des in die Umgebung zu entlassenden Gases auf einem ausreichend geringen Wert zu halten und die Temperatur des in die Umgebung zu entlassenden Gases ebenfalls gering zu halten. Die entsprechenden Ausführungsformen der vorliegenden Erfindung besitzen jede für sich selbständig erfinderischen Charakter. Bevorzugt werden jedoch zwei oder mehrere der erfindungsgemäßen Ausführungsformen miteinander kombiniert, beispielsweise das rasche Aufheizen des Brenners in der Anlaufphase des Systems mit einer oder mehreren der übrigen Ausführungsformen.

## Patentansprüche

1. Verfahren zur Behandlung von Abgas eines Brennstoffzellen-Systems (2), insbesondere eines Kraftfahrzeug-Brennstoffzellen-Systems, bei dem unumgesetzter Wasserstoff durch katalytische Oxidation aus dem Abgas entfernt wird, indem
- mindestens ein Teil des Abgases aus dem Brennstoffzellen-System als ein erstes Brennerspeisegas einem katalytischen Brenner (3)zugeführt wird,
- ein Sauerstoff enthaltendes Gas als ein zweites Brennerspeisegas dem katalytischen Brenner zugeführt wird,
- gewünschtenfalls ein Brenngas enthaltendes drittes Speisegas und/oder Wasser dem katalytischen Brenner zugeführt wird,
- in dem ersten Brennerspeisegas enthaltener Wasserstoff in dem katalytischen Brenner unter Erzeugung eines Brennerabgases katalytisch oxidiert wird,
- der Wasserstoffgehalt und/oder die Temperatur des Brennerabgases überwacht und bei Abweichung von einem vorgegebenen Wert gewünschtenfalls geregelt wird, und/oder
- die Temperatur des katalytischen Brenners überwacht und dergestalt geregelt wird, dass ein gewünschter Temperaturbereich erzielt wird, wobei
- die Regelung der Temperatur des katalytischen Brenners durch temperaturabhängige Variation der Zuführung mindestens eines der Medien erstes Brennerspeisegas, zweites Brennerspeisegas, drittes Brennerspeisegas und Wasser zu dem katalytischen Brenner erfolgt, und
- durch Überwachen des Wasserstoffgehalts in dem Brennerabgas sichergestellt wird, dass der Wasserstoffgehalt des Brennabgases einen vorgegebenen Wert nicht überschreitet.

2. Verfahren nach Anspruch 1, bei dem der Wasserstoffgehalt des Brennerabgases durch Änderung der Temperatur des katalytischen Brenners verringert wird.

3. Verfahren nach Anspruch 1 oder 2, bei dem der Wasserstoffgehalt des Brennerabgases durch Einspeisen von zweitem Brennerspeisegas direkt in das Brennerabgas verringert wird.

4. Verfahren nach einem der Ansprüche 1 bis 3, bei dem die Temperatur des in die Umgebung zu entlassenden Gases gesenkt wird, indem zweites Brennerspeisegas und/oder Wasser direkt in das Brennerabgas eingespeist wird.

5. Verfahren nach einem der Ansprüche 1 bis 4, bei dem die Temperatur des in die Umgebung zu entlassenden Gases gesenkt wird, indem das Brennerabgas durch einen Festkörper oder eine Festkörperschüttung mit hoher Wärmekapazität geführt wird.

6. Verfahren nach einem der Ansprüche 1 bis 5, bei dem dem katalytischen Brenner (3) als erstes Brennerspeisegas Anodenabgas und/oder als zweites Brennerspeisegas Luft zugeführt wird.

7. Verfahren nach einem der Ansprüche 1 bis 6, bei dem die Regelung der Temperatur des katalytischen Brenners durch Variation der Zuführmenge und/oder der Zuführzeit und/oder der Zuführstelle des ersten Brennerspeisegases und/oder des zweiten Brennerspeisegases erfolgt.

8. Verfahren nach einem der Ansprüche 1 bis 7, bei dem das Brennstoffzellen-System (2) intervallweise gespült wird, und bei dem die Regelung der Temperatur des katalytischen Brenners (3) und die Verringerung des Wasserstoffgehalts des Brennerabgases dadurch erfolgt, dass die Zuführung des zweiten Brennerspeisegases zu dem katalytischen Brenner zwischen den einzelnen Spülstößen verringert oder unterbrochen wird.

9. Verfahren nach einem der Ansprüche 1 bis 8, bei dem die Regelung der Temperatur des katalytischen Brenners (3) dadurch erfolgt, dass bei zu tiefer Brennertemperatur mindestens ein Teil des zweiten Brennerspeisegases an dem Brenner vorbeigeführt und dem Brennerabgas zugeführt wird.

10. Verfahren nach Anspruch 9, bei dem der Volumenstrom pro Zeiteinheit des an dem katalytischen Brenner (3) vorbeigeführten zweiten Brennerspeisegases geregelt werden kann.

11. Verfahren nach einem der Ansprüche 1 bis 10, bei dem die Regelung der Temperatur des katalytischen Brenners (3) dadurch erfolgt, dass dem Brenner bis zum Erreichen der gewünschten Temperatur ein Brenngas enthaltendes drittes Speisegas zugeführt wird.

12. Verfahren nach einem der Ansprüche 1 bis 11, bei dem die Regelung der Temperatur des katalytischen Brenners (3) zum raschen Aufheizen des katalytischen Brenners vor und/oder während der Startphase des Systems durchgeführt wird, insbesondere um den Wassserstoffgehalt des Brennerabgases zu verringern.

13. Verfahren nach einem der Ansprüche 1 bis 12, bei dem das dritte Brennerspeisegas Wasserstoff, Methan, Propan, Butan, Benzin oder Methanol ist.

14. Verfahren nach einem der Ansprüche 1 bis 13, bei dem die Menge an Brenngas im dritten Brennerspeisegas so bemessen wird, dass im katalytischen Brenner eine vollständige Verbrennung erfolgt.

15. Verfahren nach einem der Ansprüche 1 bis 14, bei dem die Regelung der Temperatur des katalytischen Brenners (3) dadurch erfolgt, dass bei zu hoher Brennertemperatur dem katalytischen Brenner Produktwasser aus dem Brennstoffzellen-System (2) und/oder externes Wasser zugeführt wird.

16. Verfahren nach einem der Ansprüche 1 bis 15, bei dem das Wasser als Flüssigkeit oder als Aerosol zugeführt wird.

17. Verfahren nach einem der Ansprüche 1 bis 15, bei dem die Zuführung des Wassers über eine Gaszuführung und einen porösen Körper oder eine Schüttung aus porösem Material in der Gaszuführung oder durch Zerstäuben erfolgt.

18. Verfahren nach einem der Ansprüche 1 bis 17, bei dem zur Erzielung einer gleichmäßigen Temperaturverteilung im katalytischen Brenner das erste Brennerspeisegas über die Ausdehnung des Brenners verteilt in verschiedenen Reaktionszonen (30, 31, 32, 33, 34) zugeführt wird und das zweite Brennerspeisegas durch den gesamten Brenner geführt wird.

19. Verfahren nach einem der Ansprüche 1 bis 18, bei dem alle Gase, die im Zusammenhang mit dem Brennstoffzellen-System anfallen, vor ihrer Entlassung in die Umwelt in dem katalytischen Brenner von eventuell vorhandenem Brenngas gereinigt werden.

20. Brennstoffzellen-Anlage (1), insbesondere für ein Kraftfahrzeug, aufweisend
- ein Brennstoffzellen-System (2) mit mindesten einer Brennstoffzelle,
- einen katalytischen Brenner (3),
- einen Zuführweg (4) für ein erstes Brennerspeisegas in Form von Brennstoffzellen-Abgas zu dem katalytischen Brenner,
- einen Zuführweg (5) für ein Sauerstoff enthaltendes zweites Brennerspeisegas zu dem katalytischen Brenner,
- gewünschtenfalls einen Zuführweg (6, 7) für ein Brenngas enthaltendes drittes Brennerspeisegas zu dem katalytischen Brenner,
- gewünschtenfalls einen Zuführweg (8, 8') für Wasser zu dem katalytischen Brenner,
- einem Sensor (26) zum überwachen des Wasserstoffgehalts des Brennerabgases,
- einen Sensor (9) zum Überwachen der Temperatur des katalytischen Brenners, und/oder
- einen Sensor (15) zum Überwachen der Temperatur des Brennerabgases,
- eine Steuereinrichtung zum Einleiten einer Änderung des Wasserstoffgehalts und/oder der Temperatur des Brennerabgases,
- eine Regel-Einrichtung (10, 12, 13, 14, 14') zum Variieren der Zuführung mindestens eines der Medien erstes Brennerspeisegas, zweites Brennerspeisegas, drittes Brennerspeisegas und Wasser zu dem katalytischen Brenner in Abhängigkeit von der Temperatur des katalytischen Brenners, und
- eine Steuer/Regel-Einrichtung (10) zum Freigeben der Zuführung von zweitem Brennerspeisegas zu dem katalytischen Brenner, wenn das Brennstoffzellen-System mit Wasserstoff oder einem anderen Spülgas gespült wird, und zum Verringern oder Unterbrechen der Zuführung des zweiten Brennerspeisegases zu dem katalytischen Brenner, wenn ein Spülvorgang beendet ist.

21. Brennstoffzellen-Anlage (1) nach Anspruch 20,
- bei der die Steuereinrichtung zum Einleiten einer Verringerung des Wasserstoffgehalts des Brennerabgases eine Einrichtung zum Ansteuern der Regel-Einrichtung (10, 12, 13) zum Variieren der Zuführung des zweiten Brennerspeisegases und/oder des dritten Brennerspeisegases ist.

22. Brennstoffzellen-Anlage (1) nach Anspruch 20 oder 21, aufweisend
- einen Bypass-Weg (17) zum Zuführen von zweitem Brennerspeisegas unter Umgehung des katalytischen Brenners (3) direkt in einen Brennerabgasweg (16), und
- eine Regel-Einrichtung (17') zum Regeln der dem Brennerabgasweg (16) zugeführten Menge an zweitem Brennerspeisegas in Abhängigkeit vom Wasserstoffgehalt des Brennerabgases.

23. Brennstoffzellen-Anlage (1) nach einem der Ansprüche 20 bis 22, aufweisend
- einen Zuführweg (19) zum Einspeisen von Luft in den Brennerabgasweg (16),
- eine Regel-Einrichtung (19') zum Regeln der über den Zuführweg (19) in den Brennerabgasweg (16) eingespeisten Luftmenge in Abhängigkeit vom Wasserstoffgehalt des Brennerabgases.

24. Brennstoffzellen-Anlage (1) nach einem der Ansprüche 20 bis 23, aufweisend
- einen Zuführweg (8') für Wasser in den Brennerabgasweg (16), und
- eine Regel-Einrichtung (28') zum Regeln der dem Brennerabgasweg (16) zugeführten Menge Wasser in Abhängigkeit von der Temperatur des Brennerabgases.

25. Brennstoffzellen-Anlage (1) nach einem der Ansprüche 20 bis 24, aufweisend
- einen Zuführweg (8"') für Produktwasser aus dem Brennstoffzellensystem (2) in den Brennerabgasweg (16), und
- eine Regel-Einrichtung (28"') zum Regeln der dem Brennerabgasweg (16) zugeführten Menge an Produktwasser in Abhängigkeit von der Temperatur des Brennerabgases.

26. Brennstoffzellen-Anlage (1) nach einem der Ansprüche 20 bis 25, aufweisend
- einen Zuführweg (19) zum Einspeisen von Luft in den Brennerabgasweg (16),
- eine Regel-Einrichtung (19') zum Regeln der über den Zuführweg (19) in den Brennerabgasweg (16) eingespeisten Luftmenge in Abhängigkeit von der Temperatur des Brennerabgases.

27. Brennstoffzellen-Anlage (1) nach einem der Ansprüche 20 bis 26, bei der die Steuereinrichtung zum Einleiten einer Verringerung der Temperatur des Brennerabgases eine Einrichtung zum Ansteuern der Regel-Einrichtung (19', 28', 28"') zum Regeln der in den Brennerabgasweg (16) eingespeisten Luftmenge und/oder Wassermenge und/oder Produktwassermenge ist.

28. Brennstoffzellen-Anlage (1) nach einem der Ansprüche 20 bis 27, aufweisend
einen Festkörper (23) oder eine Festkörperschüttung mit hoher Wärmekapazität oder einen Wärmetauscher im Brennerabgasweg (16).

29. Brennstoffzellen-Anlage (1) nach einem der Ansprüche 20 bis 28, aufweisend
- einen Zuführweg (6) zum Zuführen von Wasserstoff zu dem katalytischen Brenner, und
- eine Regel-Einrichtung (12) zum Regeln der dem katalytischen Brenner zugeführten Menge Wasserstoff in Abhängigkeit von der Temperatur des katalytischen Brenners und/oder dem Wasserstoffgehalt des Brennerabgases.

30. Brennstoffzellen-Anlage (1) nach einem der Ansprüche 20 bis 29, aufweisend
- einen Reformer (25) zum Erzeugen von Wasserstoff aus Kohlenwasserstoff-Brennstoffen,
- einen Zuführweg (7) zum Zuführen von Kohlenwasserstoff-Brennstoffern zu dem katalytischen Brenner (3), und
- eine Regel-Einrichtung (13) zum Regeln der dem katalytischen Brenner zugeführten Menge an Kohlenwasserstoff-Brennstoffen in Abhängigkeit von der Temperatur des katalytischen Brenners und/oder dem Wasserstoffgehalt des Brennerabgases.

31. Brennstoffzellen-Anlage (1) nach einem der Ansprüche 20 bis 30, aufweisend
- einen Zuführweg (8) für Wasser zu dem katalytischen Brenner (3), und
- eine Regel-Einrichtung (14') zum Regeln der dem katalytischen Brenner zugeführten Menge Wasser in Abhängigkeit von der Brennertemperatur.

32. Brennstoffzellen-Anlage (1) nach einem der Ansprüche 20 bis 31, aufweisend
- einen Zuführweg (8") für Produktwasser aus dem Brennstoffzellen-System (2) zu dem katalytischen Brenner (3), und
- eine Regel-Einrichtung (14) zum Regeln der dem katalytischen Brenner zugeführten Menge Produktwasser in Abhängigkeit von der Brennertemperatur.

33. Brennstoffzellen-Anlage (1) nach einem der Ansprüche 20 bis 32, aufweisend
- einen porösen Körper oder eine Schüttung aus porösem Material (24) in einem Gaszuführweg zu dem katalytischen Brenner (3), durch den oder durch die eingespeistes Wasser vor dem Eintritt in den katalytischen Brenner (3) hindurch tritt.

34. Brennstoffzellen-Anlage (1) nach einem der Ansprüche 20 bis 33 aufweisend
- einen porösen Körper oder eine Schüttung aus porösem Material (22) in einem Gaszuführweg zu dem Brennerabgasweg (16), durch den oder durch die eingespeistes Wasser vor dem Eintritt in den Brennerabgasweg (16) hindurch tritt, oder einen porösen Körper oder eine Schüttung aus porösem Material in dem Brennerabgasweg (16).

35. Brennstoffzellen-Anlage (1) nach einem der Ansprüche 20 bis 34, aufweisend
- einen katalytischen Brenner (3), der in zwei oder mehr Reaktionszonen (30, 31, 32, 33, 34) unterteilt ist, und
- einen Zuführweg (4) für ein erstes Brennerspeisegas mit Abzweigungen (40, 41, 42, 43, 44), die zu den Reaktionszonen (30, 31, 32, 33 bzw. 34) führen.

36. Brennstoffzellen-Anlage (1) nach einem der Ansprüche 20 bis 35, bei der der Zuführweg (4) für das erste Brennerspeisegas der Anodenabgasweg des Brennstoffzellen-Systems ist.

37. Brennstoffzellen-Anlage (1) nach einem der Ansprüche 20 bis 36, bei der der Zuführweg (4) für das erste Brennerspeisegas ein Sammelweg für alle Abgase des Brennstoffzellen-Systems (2), die Wasserstoff enthalten können, ist.

38. Brennstoffzellen-Anlage (1) nach einem der Ansprüche 20 bis 37, aufweisend
- ein Containment (27), das alle Bestandteile, aus denen brennbare Gase entweichen könnten, umschließt, und
- einen Zuführweg (29) für sämtliche das Containment verlassende Gase zu dem katalytischen Brenner (3).

39. Kraftfahrzeug (50), aufweisend eine Brennstoffzellenanlage (1) nach einem der Ansprüche 20 bis 38.

## Claims

1. A method of treating exhaust gas of a fuel cell system (2), in particular a motor vehicle fuel cell system, in which non-reacted hydrogen is removed from the exhaust gas by catalytic oxidation by the following steps:
- supplying at least part of the exhaust gas from the fuel cell system as a first burner feed gas to a catalytic burner (3),
- supplying an oxygen-containing gas as a second burner feed gas to said catalytic burner,
- if desired, supplying a combustion-gas-containing third feed gas and/or water to said catalytic burner,
- catalytically oxidizing hydrogen contained in said first burner feed gas in said catalytic burner so as to generate a burner exhaust gas,
- monitoring the hydrogen contents and/or the temperature of the burner exhaust gas and, if desired, regulating the same in case of deviation from a predetermined value, and/or
- monitoring the temperature of the catalytic burner and regulating the same to obtain a desired temperature range,
wherein
- regulation of the temperature of the catalytic burner is effected by temperature-dependent variation of the supply of at least one of said first burner feed gas, second burner feed gas, third burner feed gas and water to the catalytic burner, and
- wherein it is ensured by monitoring the hydrogen contents in the burner exhaust gas that the hydrogen contents of the burner exhaust gas is not in excess of a predetermined value.

2. The method of claim 1,
wherein the hydrogen contents of the burner exhaust gas is reduced by varying the temperature of said catalytic burner.

3. The method of claim 1 or 2,
wherein the hydrogen contents of the burner exhaust gas is reduced by feeding second burner feed gas directly into the burner exhaust gas.

4. The method of any of claims 1 to 3,
wherein the temperature of the gas to be discharged to the environment is reduced by feeding second burner feed gas and/or water directly into the burner exhaust gas.

5. The method of any of claims 1 to 4,
wherein the temperature of the gas to be discharged to the environment is reduced by passing the burner exhaust gas through a solid-state body or solid-state bulk material of high thermal capacity.

6. The method of any of claims 1 to 5,
wherein the catalytic burner (3) has supplied thereto anode exhaust gas as first burner feed gas and/or air as second burner feed gas.

7. The method of any of claims 1 to 6,
wherein regulation of the temperature of the catalytic burner is effected by variation of the feed amount and/or the feed time and/or the feed location of said first burner feed gas and/or said second burner feed gas.

8. The method of any of claims 1 to 7,
wherein said fuel cell system (2) is flushed in intervals and wherein regulation of the temperature of the catalytic burner (3) and reduction of the hydrogen contents of the burner exhaust gas are effected by reducing or interrupting the supply of the second burner feed gas to the catalytic burner between the individual flushes.

9. The method of any of claims 1 to 8,
wherein regulation of the temperature of the catalytic burner (3) is effected in that, in case of a too low burner temperature, at least part of the second burner feed gas is fed bypassing the burner and is supplied to the burner exhaust gas.

10. The method of claim 9,
wherein the volumetric flow per unit of time of the second burner feed gas bypassing said catalytic burner (3) is adapted to be regulated.

11. The method of any of claims 1 to 10,
wherein regulation of the temperature of the catalytic burner (3) is effected by supplying a third feed gas containing combustion gas to said burner until the desired temperate is reached.

12. The method of any of claims 1 to 11,
wherein regulation of the temperature of the catalytic burner (3) is effected for rapid heating of said catalytic burner before and/or during the starting phase of the system, in particular for reducing the hydrogen contents of the burner exhaust gas.

13. The method of any of claims 1 to 12,
wherein said third burner feed gas is hydrogen, methane, propane, butane, gasoline or methanol.

14. The method of any of claims 1 to 13,
wherein the amount of combustion gas in the third burner feed gas is dimensioned so as to effect complete combustion in the catalytic burner.

15. The method of any of claims 1 to 14,
wherein regulation of the temperature of the catalytic burner (3) is effected by supplying product water from the fuel cell system (2) and/or external water to the catalytic burner when the burner temperature is too high.

16. The method of any of claims 1 to 15,
wherein the water is supplied as a liquid or as an aerosol.

17. The method of any of claims 1 to 15,
wherein supply of the water is effected via a gas supply and a porous body or bulk porous material in said gas supply or by atomizing.

18. The method of any of claims 1 to 17,
wherein, for obtaining a uniform temperate distribution in the catalytic burner, the first burner feed gas is fed across the expanse of the burner in distributed manner in various reaction zones (30, 31, 32, 33, 34) and the second burner feed gas is passed through the entire burner.

19. The method of any of claims 1 to 18,
wherein all gases created in connection with the fuel cell system are cleaned in the catalytic burner from possibly present combustion gas before dismissal thereof to the environment.

20. A fuel cell installation (1), in particular for a motor vehicle, comprising
- a fuel cell system (2) having at least one fuel cell,
- a catalytic burner (3),
- a supply path (4) for a first burner feed gas in the form of fuel cell exhaust gas to the catalytic burner,
- a supply path (5) for an oxygen-containing, second burner feed gas to the catalytic burner,
- if desired, a supply path (6, 7) for a combustion-gas-containing third burner feed gas to the catalytic burner,
- if desired, a supply path (8, 8') for water to the catalytic burner,
- a sensor (26) for monitoring the hydrogen contents of the burner exhaust gas,
- a sensor (9) for monitoring the temperature of the catalytic burner, and/or
- a sensor (15) for monitoring the temperature of the burner exhaust gas,
- a control means for initiating a variation of the hydrogen contents and/or the temperature of the burner exhaust gas,
- a regulating means (10, 12, 13, 14, 14') for varying the supply of at least one of said first burner feed gas, second burner feed gas, third burner feed gas and water to the catalytic burner in accordance with the temperature of the catalytic burner, and
- a regulating/control means (10) for releasing the supply of second burner feed gas to the catalytic burner when the fuel cell system is flushed with hydrogen or another flushing gas, and for reducing or interrupting the supply of said second burner feed gas to the catalytic burner, when a flushing operation is terminated.

21. The fuel cell installation (1) of claim 20,
- wherein the control means for initiating a reduction of the hydrogen contents of the burner exhaust gas is a means for controlling said regulating means (10, 12, 13) for varying the supply of said second burner feed gas and/or said third burner feed gas.

22. The fuel cell installation (1) of claim 20 or 21,
comprising
- a bypass path (17) for supplying second burner feed gas, bypassing the catalytic burner (3), directly into a burner exhaust gas path (16), and
- a regulating means (17') for regulating the amount of second burner feed gas supplied to the burner exhaust gas path (16) in accordance with the hydrogen contents of the burner exhaust gas.

23. The fuel cell installation (1) of any of claims 20 to 22,
comprising
- a supply path (19) for feeding air to the burner exhaust gas path (16),
- a regulating means (19') for regulating the amount of air supplied to the burner exhaust gas path (16) via the supply path (19) in accordance with the hydrogen contents of the burner exhaust gas.

24. The fuel cell installation (1) of any of claims 20 to 23,
comprising
- a supply path (8') for supplying water to the burner exhaust gas path (16), and
- a regulating means (28') for regulating the amount of water supplied to the burner exhaust gas path (16) in accordance with the temperature of the burner exhaust gas.

25. The fuel cell installation (1) of any of claims 20 to 24,
comprising
- a supply path (8'") for supplying product water from the fuel cell system (2) to the burner exhaust gas path (16), and
- a regulating means (28'") for regulating the amount of product water supplied to the burner exhaust gas path (16) in accordance with the temperature of the burner exhaust gas.

26. The fuel cell installation (1) of any of claims 20 to 25,
comprising
- a supply path (19) for feeding air to the burner exhaust gas path (16),
- a regulating means (19') for regulating the amount of air supplied to the burner exhaust gas path (16) via the supply path (19) in accordance with the temperature of the burner exhaust gas.

27. The fuel cell installation (1) of any of claims 20 to 26,
wherein the control means for initiating a reduction of the temperature of the burner exhaust gas is a means for controlling said regulating means (19', 28', 28'") for regulating the amount of air and/or water and/or product water fed to the burner exhaust gas path (16).

28. The fuel cell installation (1) of any of claims 20 to 27,
comprising
a solid-state body (23) or a solid-state bulk material of high thermal capacity or a heat exchanger in the burner exhaust gas path (16).

29. The fuel cell installation (1) of any of claims 20 to 28,
comprising
- a supply path (6) for supplying hydrogen to the catalytic burner, and
- a regulating means (12) for regulating the amount of hydrogen supplied to the catalytic burner in accordance with the temperature of the catalytic burner and/or the hydrogen contents of the burner exhaust gas.

30. The fuel cell installation (1) of any of claims 20 to 29,
comprising
- a reformer (25) for generating hydrogen from hydrocarbon fuels,
- a supply path (7) for supplying hydrocarbon fuels to the catalytic burner (3), and
- a regulating means (13) for regulating the amount of hydrocarbon fuels supplied to the catalytic burner in accordance with the temperature of the catalytic burner and/or the hydrogen contents of the burner exhaust gas.

31. The fuel cell installation (1) of any of claims 20 to 30,
comprising
- a supply path (8) for supplying water to the catalytic burner (3), and
- a regulating means (14') for regulating the amount of water supplied to the catalytic burner in accordance with the burner temperature.

32. The fuel cell installation (1) of any of claims 20 to 31,
comprising
- a supply path (8") for supplying product water from the fuel cell system (2) to the catalytic burner (3), and
- a regulating means (14) for regulating the amount of product water supplied to the catalytic burner in accordance with the burner temperature.

33. The fuel cell installation (1) of any of claims 20 to 32,
comprising
- a porous body or a bulk porous material (24) in a gas supply path to the catalytic burner (3) through which feed water passes before entering the catalytic burner (3).

34. The fuel cell installation (1) of any of claims 20 to 33,
comprising
- a porous body or a bulk porous material (24) in a gas supply path to the burner exhaust gas path (16) through which feed water passes before entering the burner exhaust gas path (16), or a porous body or bulk porous material in the burner exhaust gas path (16).

35. The fuel cell installation (1) of any of claims 20 to 34,
comprising
- a catalytic burner (3) divided into two or more reaction zones (30, 31, 32, 33, 34), and
- a supply path (4) for a first burner feed gas, comprising branches (40, 41, 42, 43, 44) leading to said reaction zones (30, 31, 32, 33 and 34, respectively).

36. The fuel cell installation (1) of any of claims 20 to 35,
wherein the supply path (4) for the first burner feed gas is the anode exhaust gas path of the fuel cell system.

37. The fuel cell installation (1) of any of claims 20 to 36,
wherein the supply path (4) for the first burner feed gas is a collective path for all exhaust gasses of the fuel cell system (2) that possibly contain hydrogen.

38. The fuel cell installation (1) of any of claims 20 to 37,
comprising
- a containment (27) enclosing all constituent parts from which combustible gasses could escape; and
- a supply path (29) for supplying all gasses exiting the containment to the catalytic burner (3).

39. A motor vehicle (50), comprising a fuel cell installation (1) according to any of claims 20 to 38.

## Revendications

1. Procédé pour traiter des gaz d'échappement d'un système d'éléments à combustible (2), en particulier d'un système d'éléments à combustible de véhicule, dans lequel de l'hydrogène non transformé est enlevé des gaz d'échappement par oxydation catalytique, sachant que
- au moins une partie des gaz d'échappement provenant du système d'éléments à combustible est amenée en tant que premier gaz d'alimentation de brûleur à un brûleur (3) catalytique,
- un gaz contenant de l'oxygène est amené en tant que second gaz d'alimentation de brûleur au brûleur catalytique,
- si on le souhaite, un troisième gaz d'alimentation contenant du gaz combustible et/ou de l'eau est amené au brûleur catalytique,
- de l'hydrogène contenu dans le premier gaz d'alimentation de brûleur est oxydé par catalyse dans le brûleur catalytique en générant des gaz d'échappement du brûleur,
- la teneur en hydrogène et/ou la température des gaz d'échappement du brûleur est surveillée et régulée si on le souhaite en cas d'écart par rapport à une valeur prédéfinie, et/ou
- la température du brûleur catalytique est surveillée et régulée de telle sorte qu'une plage de températures souhaitée soit obtenue
- la régulation de la température du brûleur catalytique s'effectuant en faisant varier selon la température l'arrivée d'au moins l'un des fluides premier gaz d'alimentation de brûleur, second gaz d'alimentation de brûleur, troisième gaz d'alimentation de brûleur et eau au brûleur catalytique, et
- il est garanti par le contrôle de la teneur en hydrogène dans les gaz d'échappement du brûleur que la teneur en hydrogène des gaz d'échappement du brûleur ne dépasse pas une valeur prédéfinie.

2. Procédé selon la revendication 1, dans lequel la teneur en hydrogène des gaz d'échappement du brûleur est réduite par la variation de la température du brûleur catalytique.

3. Procédé selon la revendication 1 ou 2, dans lequel la teneur en hydrogène des gaz d'échappement du brûleur est réduite par l'injection du second gaz d'alimentation de brûleur directement dans les gaz d'échappement du brûleur

4. Procédé selon l'une quelconque des revendications 1 à 3, dans lequel la température du gaz à faire sortir dans l'environnement est abaissée en injectant le second gaz d'alimentation de brûleur et/ou de l'eau directement dans les gaz d'échappement du brûleur

5. Procédé selon l'une quelconque des revendications 1 à 4, dans lequel la température du gaz à faire sortir dans l'environnement est abaissée en guidant le gaz d'échappement du brûleur à travers un solide ou un remblai de solide à capacité thermique élevée.

6. Procédé selon l'une quelconque des revendications 1 à 5, dans lequel des gaz d'échappement d'anode comme premier gaz d'alimentation de brûleur et/ou de l'air comme second gaz d'alimentation du brûleur sont amenés au brûleur (3) catalytique.

7. Procédé selon l'une quelconque des revendications 1 à 6, dans lequel la régulation de la température du brûleur catalytique s'effectue en faisant varier la quantité d'alimentation et/ou le temps d'alimentation et/ou le point d'alimentation du premier gaz d'alimentation de brûleur et/ou du second gaz d'alimentation de brûleur

8. Procédé selon l'une quelconque des revendications 1 à 7, dans lequel le système d'éléments à combustible (2) est lavé par intervalles et dans lequel la régulation de la température du brûleur (3) catalytique et la réduction de la teneur en hydrogène des gaz d'échappement du brûleur s'effectuent par le fait que l'arrivée du second gaz d'alimentation de brûleur au brûleur catalytique est réduite ou interrompue entre les cycles de lavage individuels.

9. Procédé selon l'une quelconque des revendications 1 à 8, dans lequel la régulation de la température du brûleur (3) catalytique s'effectue par le fait, à une température de brûleur trop basse, au moins une partie du second gaz d'alimentation de brûleur est guidée en passant devant le brûleur et est amenée aux gaz d'échappement du brûleur.

10. Procédé selon la revendication 9, dans lequel le flux volumique par unité de temps du second gaz d'alimentation de brûleur, guidé en passant devant le brûleur (3) catalytique, peut être régulé.

11. Procédé selon l'une quelconque des revendications 1 à 10, dans lequel la régulation de la température du brûleur (3) catalytique s'effectue par le fait qu'un troisième gaz d'alimentation contenant du gaz combustible est amené au brûleur jusqu'à atteindre la température souhaitée.

12. Procédé selon l'une quelconque des revendications 1 à 11, dans lequel la régulation de la température du brûleur (3) catalytique est effectuée pour faire chauffer rapidement le brûleur catalytique avant et/ou pendant la phase de démarrage du système, en particulier pour réduire la teneur en hydrogène des gaz d'échappement du brûleur.

13. Procédé selon l'une quelconque des revendications 1 à 12, dans lequel le troisième gaz d'alimentation de brûleur est de l'hydrogène, du méthane, du propane, du butane, de l'essence ou du méthanol.

14. Procédé selon l'une quelconque des revendications 1 à 13, dans lequel la quantité de gaz combustible dans le troisième gaz d'alimentation de brûleur est dimensionnée de telle sorte qu'une combustion complète intervient dans le brûleur catalytique.

15. Procédé selon l'une quelconque des revendications 1 à 14, dans lequel la régulation de la température du brûleur (3) catalytique s'effectue par le fait que, à une température de brûleur trop élevée, de l'eau-produit provenant du système d'éléments à combustible (2) et/ou de l'eau externe est amenée au brûleur catalytique.

16. Procédé selon l'une quelconque des revendications 1 à 15, dans lequel l'eau est amenée sous forme de liquide ou sous forme d'aérosol.

17. Procédé selon l'une quelconque des revendications 1 à 15, dans lequel l'arrivée de l'eau s'effectue au moyen d'une arrivée de gaz ou d'un corps poreux ou d'un remblai à base de matériau poreux dans l'arrivée de gaz ou par pulvérisation.

18. Procédé selon l'une quelconque des revendications 1 à 17, dans lequel, pour obtenir une répartition de température uniforme dans le brûleur catalytique, le premier gaz d'alimentation de brûleur est amené par l'extension du brûleur de façon répartie dans différentes zones de réaction (30, 31, 32, 33, 34) et le second gaz d'alimentation de brûleur est guidé à travers l'ensemble du brûleur.

19. Procédé selon l'une quelconque des revendications 1 à 18, dans lequel tous les gaz, qui sont produits en rapport avec le système d'éléments à combustible, sont débarrassés, avant leur sortie dans l'environnement dans le brûleur catalytique, du gaz combustible éventuellement présent.

20. Installation d'éléments à combustible (1), en particulier pour un véhicule automobile présentant
- un système d'éléments à combustible (2) présentant au moins une cellule à combustible,
- un brûleur (3) catalytique,
- un chemin (4) pour l'arrivée d'un premier gaz d'alimentation de brûleur sous la forme de gaz d'échappement d'éléments à combustible au brûleur catalytique,
- un chemin (5) pour l'arrivée d'un second gaz d'alimentation de brûleur contenant de l'oxygène au brûleur catalytique,
- le cas échéant un chemin (6, 7) pour l'arrivée d'un troisième gaz d'alimentation de brûleur contenant du gaz combustible au brûleur catalytique,
- le cas échéant un chemin (8, 8') pour l'arrivée de l'eau au brûleur catalytique,
- un capteur (26) pour le contrôle de la teneur en hydrogène des gaz d'échappement du brûleur,
- un capteur (9) pour le contrôle de la température du brûleur catalytique, et/ou
- un capteur (15) pour le contrôle de la température des gaz d'échappement du brûleur,
- un dispositif de commande pour l'amorçage d'une modification de la teneur en hydrogène et/ou de la température des gaz d'échappement du brûleur,
- un dispositif de régulation (10, 12, 13, 14, 14') pour la variation de l'arrivée d'au moins l'un des fluides (premier gaz d'alimentation de brûleur, second gaz d'alimentation de brûleur, troisième gaz d'alimentation de brûleur et eau) au brûleur catalytique en fonction de la température du brûleur catalytique, et
- un dispositif de commande/régulation (10) pour l'autorisation de l'arrivée du second gaz d'alimentation de brûleur au brûleur catalytique lorsque le système d'éléments à combustible est lavé avec de l'hydrogène ou un autre gaz de lavage, et au brûleur catalytique pour la réduction ou l'interruption de l'arrivée du second gaz d'alimentation de brûleur au brûleur catalytique lorsqu'une opération de lavage est terminée.

21. Installation d'éléments à combustible (1) selon la revendication 20,
- sur laquelle le dispositif de commande pour l'amorçage d'une réduction de la teneur en hydrogène des gaz d'échappement du brûleur est un dispositif pour l'activation du dispositif de régulation (10, 12, 13) pour la variation de l'arrivée du second gaz d'alimentation de brûleur et/ou du troisième gaz d'alimentation de brûleur.

22. Installation d'éléments à combustible (1) selon la revendication 20 ou 21, présentant
- un chemin de dérivation (17) pour l'arrivée du second gaz d'alimentation de brûleur en contournant le brûleur (3) catalytique directement dans un chemin de gaz d'échappement du brûleur (16), et
- un dispositif de régulation (17') pour la régulation de la quantité, amenée au chemin de gaz d'échappement du brûleur (16), du second gaz d'alimentation de brûleur en fonction de la teneur en hydrogène des gaz d'échappement du brûleur.

23. Installation d'éléments à combustible (1) selon l'une quelconque des revendications 20 à 22, présentant
- un chemin d'arrivée (19) pour l'injection d'air dans le chemin de gaz d'échappement du brûleur (16),
- un dispositif de régulation (19') pour la régulation de la quantité d'air injectée par le chemin d'arrivée (19) dans le chemin de gaz d'échappement du brûleur (16) en fonction de la teneur en hydrogène des gaz d'échappement du brûleur.

24. Installation d'éléments à combustible (1) selon l'une quelconque des revendications 20 à 23, présentant
- un chemin d'arrivée (8') pour l'eau dans le chemin de gaz d'échappement du brûleur (16), et
- un dispositif de régulation (28') pour la régulation de la quantité d'eau amenée au chemin de gaz d'échappement du brûleur (16) en fonction de la température des gaz d'échappement du brûleur.

25. Installation d'éléments à combustible (1) selon l'une quelconque des revendications 20 à 24, présentant
- un chemin d'arrivée (8"') pour l'eau-produit venant du système d'éléments à combustible (2) dans le chemin de gaz d'échappement du brûleur (16), et
- un dispositif de régulation (28'") pour la régulation de la quantité d'eau-produit amenée au chemin de gaz d'échappement du brûleur (16) en fonction de la température des gaz d'échappement du brûleur.

26. Installation d'éléments à combustible (1) selon l'une quelconque des revendications 20 à 25, présentant
- un chemin d'arrivée (19) pour l'injection d'air dans le chemin de gaz d'échappement du brûleur (16),
- un dispositif de régulation (19') pour la régulation de la quantité d'air injectée par le chemin d'arrivée (19) dans le chemin de gaz d'échappement du brûleur (16) en fonction de la température des gaz d'échappement du brûleur.

27. Installation d'éléments à combustible (1) selon l'une quelconque des revendications 20 à 26, sur laquelle le dispositif de commande pour l'amorçage d'une réduction de la température des gaz d'échappement du brûleur est un dispositif pour l'activation du dispositif de régulation (19', 28', 28"') pour la régulation de la quantité d'air et/ou de la quantité d'eau et/ou de la quantité d'eau-produit injectée dans le chemin de gaz d'échappement du brûleur (16).

28. Installation d'éléments à combustible (1) selon l'une quelconque des revendications 20 à 27, présentant
un solide (23) ou un remblai de solide à capacité thermique élevée ou un échangeur de chaleur dans le chemin de gaz d'échappement du brûleur (16).

29. Installation d'éléments à combustible (1) selon l'une quelconque des revendications 20 à 28, présentant
- un chemin d'arrivée (6) pour l'arrivée d'hydrogène au brûleur catalytique, et
- un dispositif de régulation (12) pour la régulation de la quantité d'hydrogène amenée au brûleur catalytique en fonction de la température du brûleur catalytique et/ou de la teneur en hydrogène des gaz d'échappement du brûleur.

30. Installation d'éléments à combustible (1) selon l'une quelconque des revendications 20 à 29, présentant
- un reformer (25) pour générer de l'hydrogène à partir de combustibles à base d'hydrocarbure,
- un chemin d'arrivée (7) pour l'arrivée de combustibles à base d'hydrocarbure au brûleur (3) catalytique, et
- un dispositif de régulation (13) pour la régulation de la quantité, amenée au brûleur catalytique, de combustibles à base d'hydrocarbure en fonction de la température du brûleur catalytique et/ou de la teneur en hydrogène des gaz d'échappement du brûleur.

31. Installation d'éléments à combustible (1) selon l'une quelconque des revendications 20 à 30, présentant
- un chemin d'arrivée (8) pour de l'eau au brûleur (3) catalytique, et
- un dispositif de régulation (14') pour la régulation de la quantité d'eau amenée au brûleur catalytique en fonction de la température du brûleur.

32. Installation d'éléments à combustible (1) selon l'une quelconque des revendications 20 à 31, présentant
- un chemin d'arrivée (8") pour l'eau-produit provenant du système d'éléments à combustible (2) au brûleur (3) catalytique, et
- un dispositif de régulation (14) pour la régulation de la quantité d'eau-produit amenée au brûleur catalytique en fonction de la température du brûleur.

33. Installation d'éléments à combustible (1) selon l'une quelconque des revendications 20 à 32, présentant
- un corps poreux ou un remblai à base de matériau (24) poreux dans un chemin d'arrivée de gaz au brûleur (3) catalytique, par lequel de l'eau injectée passe avant l'entrée dans le brûleur (3) catalytique.

34. Installation d'éléments à combustible (1) selon l'une quelconque des revendications 20 à 33, présentant
- un corps poreux ou un remblai à base de matériau (22) poreux dans un chemin d'arrivée de gaz au chemin de gaz d'échappement du brûleur (16), à travers lequel l'eau injectée passe avant l'entrée dans le chemin de gaz d'échappement du brûleur (16), ou un corps poreux ou un remblai à base de matériau poreux dans le chemin de gaz d'échappement du brûleur (16).

35. Installation d'éléments à combustible (1) selon l'une quelconque des revendications 20 à 34, présentant
- un brûleur (3) catalytique, qui est subdivisé en deux ou plus de deux zones de réaction (30, 31, 32, 33, 34), et
- un chemin d'arrivée (4) pour un premier gaz d'alimentation de brûleur avec des embranchements (40, 41, 42, 43, 44), qui aboutissent aux zones de réaction (30, 31, 32, 33 et 34).

36. Installation d'éléments à combustible (1) selon l'une quelconque des revendications 20 à 35, sur laquelle le chemin d'arrivée (4) pour le premier gaz d'alimentation de brûleur est le chemin de gaz d'échappement d'anode du système d'éléments à combustible.

37. Installation d'éléments à combustible (1) selon l'une quelconque des revendications 20 à 36, sur laquelle le chemin d'arrivée (4) pour le premier gaz d'alimentation de brûleur est un chemin collectif pour tous les gaz d'échappement du système d'éléments à combustible (2) qui peuvent contenir de l'hydrogène.

38. Installation d'éléments à combustible (1) selon l'une quelconque des revendications 20 à 37, présentant
- une enceinte de confinement (27), qui entoure tous les composants desquels des gaz combustibles pourraient s'échapper, et
- un chemin (29) pour l'arrivée de tous les gaz quittant l'enceinte de confinement au brûleur (3) catalytique.

39. Véhicule (50) présentant une installation d'éléments à combustible (1) selon l'une quelconque des revendications 20 à 38.
